# EUROPÄISCHE PATENTSCHRIFT

(11) **EP 3 049 455 B1**
(45) Veröffentlichungstag und Bekanntmachung des Hinweises auf die Patenterteilung: **25.11.2020**
(21) Anmeldenummer: 14766119.3
(22) Anmeldetag: 03.09.2014
(51) Int. Cl.: C08G 18/80, C08G 18/28, C08G 18/30

(54) **NEUE VERNETZER FÜR BESCHICHTUNGSMASSEN**
NEW CROSSLINKERS FOR COATING COMPOUNDS
NOUVEAUX AGENTS DE RÉTICULATION POUR MATIÈRES DE REVÊTEMENT

(30) Priorität: 25.09.2013 EP 13185926
(43) Veröffentlichungstag der Anmeldung: 03.08.2016
(73) Patentinhaber: BASF SE, 67056 Ludwigshafen am Rhein (DE)
(72) Erfinder: LUCAS, Frederic, 77654 Offenburg (DE)
(74) Vertreter: BASF IP Association
(86) Internationale Anmeldenummer: PCT/EP2014/068682
(87) Internationale Veröffentlichungsnummer: WO 2015/043894

(56) Entgegenhaltungen:
- DE-A1- 10 308 105
- DE-A1- 10 320 432
- DE-A1-102006 055 081
- US-A1- 2008 248 223

## Beschreibung

Die vorliegende Erfindung beschreibt neue Vernetzer für Beschichtungsmassen, deren Herstellung und deren Verwendung.

Die Blockierung von Isocyanatgruppen mit Blockierungsmittel ist seit langem bekannt ist bereits in der Literatur Gegenstand von Literaturüberblicken gewesen, siehe z.B. D. A. Wicks, Z. W. Wicks, Progress in Organic Coatings, 36, 148-172 (1999), 41, 1-83 (2001) sowie 43, 131-140 (2001).

Nachteilig an dem Einsatz von blockierten Isocyanaten ist, daß nach der Deblockierung der Isocyanate durch Erwärmen die Blockierungsmittel aus der Beschichtung ausgetrieben werden und so zu Emissionen führen oder bei Verbleib in der Beschichtung dort zu Verfärbungen, Folgereaktionen, Trübungen oder Blasenbildung führen können.

Aus D.C. Webster et al., Progress in Organic Coatings 57 (2006), 128 - 139 ist es bekannt, Biurete und Isocyanurate von 1,6-Hexamethylendiisocyanat mit Glycidol umzusetzen. Die erhaltenen Produkte können thermisch vernetzt werden, weiterhin wird vorgeschlagen, jedoch nicht explizit durchgefüht, mit Aminen zu vernetzen. DE 103 20 432 A1 offenbart thermisch härtbare Massen und ihre Anwendung als Beschichtungen. Im Herstellbeispiel 2 wird zuerst IPDI mit einem sekundären Amin (Bis (3-triethoxysilylpropyl)amin) zur Reaktion gebracht. Anschließend wird zu der resultierenden Mischung Glycidol zudosiert, bis keine Isocyanatgruppe mehr nachweisbar ist. Im Beispiel 2 wird die Herstellung eines Beschichtungsstoffs auf Basis des im Herstellbeispiel 2 hergestellten PUR-Systems offenbart.

Aufgabe der vorliegenden Erfindung war es, blockierte Isocyanate so zu modifizieren, daß Beschichtungen erhalten werden können, die die oben aufgeführten Nachteile nicht oder zu einem geringeren Ausmaß zeigen.

Die Aufgabe wurde gelöst durch Polyurethane, erhältlich durch Umsetzung von
(A) mindestens einem aliphatischen oder cycloaliphatischen Di- oder Polyisocyanat,
(B) mindestens einer Verbindung mit mindestens einer, bevorzugt genau einer Hydroxy- oder Thiolgruppe und mindestens einer Epoxygruppe, sowie
(C) mindestens ein Blockierungsmittel mit einer Gruppe, die sowohl gegenüber einer Isocyanatgruppe als auch gegenüber einer Epoxygruppe reaktiv ist,
   wobei die Verbindung (C) ausgewählt ist aus der Gruppe bestehend aus
   - cyclische sekundäre Amine, Di -C₁-C₁₀-alkylamine und Di -C₆-C₁₂-cycloalkylamine, bevorzugt Diethylamin, Diisopropylamin, Methylisopropyl-amin, Methylbutylamin, 2,6-Dimethylpiperidin, Dicyclohexylamine, Bis(3,5,5-trimethylcyclohexyl)amin, und 2,2,6,6-Tetramethylpiperidin
   - Lactamen,
   - besonders 2-Pyrrolidon und Caprolactam
   - Oximen,
   - besonders Oxime von Methyl-n-amyl keton, Methylisoamylketon, Methyl-3-ethylheptylketon, Methyl-2,4-dimethylpentylketon, Butanon (Methylethylketon), Cyclohexanon, Methylisopropylketon, Methylisobutylketon, Diisobutylketon, Methyl-t-butylketon, Diisopropylketon und 2,2,6,6-Tetramethylcyclohexanon, besonders bevorzugt Butanonoxim (Methyl ethyl keton oxim),
   - Pyrazolen,
   - besonders 3,5-Dimethylpyrazol,
   - Triazolen,
   - besonders 1,2,4-Triazole,
   - 1,3-Dicarbonylverbindungen,
   - besonders Acetylaceton, Malonsäuredi-C₁-C₁₀-alkylester und Acetessigsäure-Ci-Cioalkylester, besonders bevorzugt Malonsäurediethylester und Acetessigsäureethylester.

Ein weiterer Gegenstand sind Beschichtungsmassen, die mindestens ein erfindungsgemäßes Polyurethan sowie optional Lösungsmittel, optional mindestens einen Katalysator und/oder optional lacktypische Additive enthalten. Bevorzugt ist mindestens ein Lösungsmittel anwesend.

Es stellt einen Vorteil der erfindungsgemäßen Beschichtungsmassen dar, daß mit den erfindungsgemäßen Beschichtungsmassen auch dicke Schichten blasenfrei ausgehärtet werden können. Einen weiterer Vorteil der vorliegenden Erfindung stellt es dar, daß aus den erfindungsgemäßen Beschichtungsmassen die verwendeten Blockierungsmittel aus den blockierten Polyisocyanaten nicht aus der Beschichtung freigesetzt werden, sondern abgefangen werden. Somit werden die Emissionen der gehärteten Beschichtungen verringert.

### Komponente (A)

Mindestens ein aliphatisches oder cycloaliphatisches Di- oder Polyisocyanat.

Die für die Herstellung der Polyisocyanate eingesetzten monomeren Isocyanate können aromatisch, aliphatisch oder cycloaliphatisch sein, bevorzugt aliphatisch oder cycloaliphatisch, was in dieser Schrift kurz als (cyclo)aliphatisch bezeichnet wird, besonders bevorzugt sind aliphatische Isocyanate.

Aromatische Isocyanate sind solche, die mindestens ein aromatisches Ringsystem enthalten, also sowohl rein aromatische wie auch araliphatische Verbindungen.

Cycloaliphatische Isocyanate sind solche, die mindestens ein cycloaliphatisches Ringsystem enthalten.
Aliphatische Isocyanate sind solche, die ausschließlich gerade oder verzweigte Ketten enthalten, also acyclische Verbindungen.

Bei den monomeren Isocyanaten handelt es sich bevorzugt um Diisocyanate, die genau zwei Isocyanatgruppen tragen. Es kann sich aber prinzipiell auch um Monoisocyanate mit einer Isocyanatgruppe handeln.

Es kommen prinzipiell auch höhere Isocyanate mit im Mittel mehr als 2 Isocyanatgruppen in Betracht. Dafür eignen sich beispielsweise Triisocyanate wie Triisocyanatononan, 2'-Isocyanatoethyl-(2,6-diisocyanatohexanoat), 2,4,6-Triisocyanatotoluol, Triphenylmethantriisocyanat oder 2,4,4'-Triisocyanatodiphenylether oder die Gemische aus Di-, Tri- und höheren Polyisocyanaten, die beispielsweise durch Phosgenierung von entsprechenden Anilin/Formaldehyd-Kondensaten erhalten werden und Methylenbrücken aufweisende Polyphenylpolyisocyanate darstellen, insbesondere Triisocyanatononan und 2'-Isocyanatoethyl-(2,6-diisocyanatohexanoat.

Bei den monomeren Isocyanaten handelt es sich bevorzugt um Isocyanate mit 4 bis 20 C-Atomen. Beispiele für übliche Diisocyanate sind aliphatische Diisocyanate wie Tetramethylendiisocyanat, 1,5-Pentamethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Derivate des Lysindiisocyanats, (z.B. Methyl- oder Ethyl-2,6-diisocyanatohexanoat), Trimethylhexandiisocyanat oder Tetramethylhexandiisocyanat, cycloaliphatische Diisocyanate wie 1,4-, 1,3- oder 1,2-Diisocyanatocyclohexan, 4,4'- oder 2,4'-Di(isocyanatocyclohexyl)methan, 1-Isocyanato-3,3,5-trimethyl-5-(isocyanatomethyl)cyclohexan (Isophorondiisocyanat), 1,3- oder 1,4-Bis(isocyanatomethyl)cyclohexan oder 2,4-, oder 2,6-Di-isocyanato-1-methylcyclohexan sowie 3 (bzw. 4), 8 (bzw. 9)-Bis(isocyanatomethyl)-tricy-clo[5.2.1.02.6]decan-Isomerengemische, sowie aromatische Diisocyanate wie 2,4- oder 2,6-Toluylendiisocyanat und deren Isomerengemische, m- oder p-Xylylendiisocyanat, 2,4'- oder 4,4'-Diisocyanatodiphenylmethan und deren Isomerengemische, 1,3- oder 1,4-Phenylendi-isocyanat, 1-Chlor-2,4-phenylendiisocyanat, 1,5-Naphthylendiisocyanat, Diphenylen-4,4'-di-isocyanat, 4,4'-Diisocyanato-3,3'-dimethyldiphenyl, 3-Methyldi-phenylmethan-4,4'-diisocyanat, Tetramethylxylylendiisocyanat, 1,4-Diisocyanatobenzol oder Diphenylether-4,4'-diisocyanat.

Besonders bevorzugt sind 1,6-Hexamethylendiisocyanat, 1,3-Bis(isocyanatomethyl)cyclohexan, Isophorondiisocyanat und 4,4'- oder 2,4'-Di(isocyanatocyclohexyl)methan, ganz besonders bevorzugt sind Isophorondiisocyanat und 1,6-Hexamethylendiisocyanat, insbesondere bevorzugt ist 1,6-Hexamethylendiisocyanat.

Es können auch Gemische der genannten Isocyanate vorliegen.

Isophorondiisocyanat liegt zumeist als ein Gemisch, und zwar der cis- und trans-Isomere vor, in der Regel im Verhältnis von ca. 60:40 bis 90:10 (w/w), bevorzugt von 70:30-90:10. Dicyclohexylmethan-4,4'-diisocyanat kann ebenfalls als Gemisch der verschiedenen cis- und trans-Isomere vorliegen.

Für die vorliegende Erfindung können sowohl solche Diisocyanate eingesetzt werden, die durch Phosgenierung der korrespondierenden Amine erhalten werden, als auch solche, die ohne die Verwendung von Phosgen, d. h. nach phosgenfreien Verfahren, hergestellt werden. Nach Angaben der EP-A-0 126 299 (US 4 596 678), EP-A-126 300 (US 4 596 679) und EP-A-355 443 (US 5 087 739) beispielsweise können (cyclo)aliphatische Diisocyanate, z.B. wie 1,6-Hexamethylendiisocyanat (HDI), isomere aliphatische Diisocyanate mit 6 Kohlenstoffatomen im Alkylenrest, 4,4'- oder 2,4'-Di(isocyanatocyclohexyl)methan und 1-Isocyanato-3-isocyanato-methyl-3,5,5-trimethyl-cyclohexan (Isophorondiisocyanat bzw. IPDI) hergestellt werden durch Umsetzung der (cyclo)aliphatischen Diamine mit beispielsweise Harnstoff und Alkoholen zu (cyclo)-aliphatischen Biscarbaminsäureestern und deren thermische Spaltung in die entsprechenden Diisocyanate und Alkohole. Die Synthese erfolgt meist kontinuierlich in einem Kreislaufverfahren und optional in Gegenwart von N-unsubstituierten Carbaminsäureestern, Dialkylcarbonaten und anderen aus dem Reaktionsprozess zurückgeführten Nebenprodukten. So erhaltene Diisocyanate weisen in der Regel einen sehr geringen oder sogar nicht messbaren Anteil an chlorierten Verbindungen auf, was beispielsweise in Anwendungen in der Elektronikindustrie vorteilhaft ist.

In einer Ausführungsform der vorliegenden Erfindung weisen die eingesetzten Isocyanate an hydrolysierbarem Chlor weniger als 100 ppm auf, bevorzugt weniger als 50 ppm, insbesondere weniger als 30 ppm und speziell weniger als 20 ppm. Dies kann beispielsweise gemessen werden durch die ASTM-Vorschrift D4663-98. Die Gehalte an gesamtem Chlor liegen beispielsweise bei unter 1000 ppm, bevorzugt unter 800 ppm und besonders bevorzugt unter 500 ppm (ermittelt per argentometrischer Titration nach Hydrolyse).

Selbstverständlich können auch Gemische aus solchen monomeren Isocyanaten, die durch Umsetzung der (cyclo)aliphatischen Diamine mit beispielsweise Harnstoff und Alkoholen und Spaltung der erhaltenen (cyclo)aliphatischen Biscarbaminsäureester erhalten worden sind, mit solchen Diisocyanaten, die durch Phosgenierung der korrespondierenden Amine erhalten worden sind, eingesetzt werden.

Die Polyisocyanate, zu denen die monomeren Isocyanate oligomerisiert werden können, sind in der Regel wie folgt charakterisiert:
Die mittlere NCO Funktionalität solcher Verbindungen beträgt in der Regel mindestens 1,8 und kann bis zu 8 betragen, bevorzugt 2 bis 5 und besonders bevorzugt 2,4 bis 4.

Der Gehalt an Isocyanatgruppen nach der Oligomerisierung, berechnet als NCO = 42 g/mol, beträgt, wenn nicht anders angegeben, in der Regel von 5 bis 25 Gew%.

Bevorzugt handelt es sich bei den Polyisocyanaten um folgende Verbindungen:
1) Isocyanuratgruppen aufweisende Polyisocyanate von aromatischen, aliphatischen und/oder cycloaliphatischen Diisocyanaten. Besonders bevorzugt sind hierbei die entsprechenden aliphatischen und/oder cycloaliphatischen Isocyanato-Isocyanurate und insbesondere die auf Basis von Hexamethylendiisocyanat und Isophorondiisocyanat. Bei den dabei vorliegenden Isocyanuraten handelt es sich insbesondere um Tris-isocyanatoalkyl- bzw. Tris-isocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im Allgemeinen einen NCO-Gehalt von 10 bis 30 Gew.-%, insbesondere 15 bis 25 Gew.-% und eine mittlere NCO-Funktionalität von 2,6 bis 8.
   Die Isocyanuratgruppen aufweisenden Polyisocyanate können in geringerem Umfang auch Urethan- und/oder Allophanat-Gruppen enthalten, bevorzugt mit einem Gehalt gebundenen Alkohols von kleiner 2 % bezogen auf das Polyisocyanat.
2) Uretdiongruppen aufweisende Polyisocyanate mit aromatisch, aliphatisch und/oder cycloaliphatisch gebundenen Isocyanatgruppen, vorzugsweise aliphatisch und/oder cycloaliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten.
   Die Uretdiongruppen aufweisenden Polyisocyanate werden häufig im Gemisch mit anderen Polyisocyanaten, insbesondere den unter 1) genannten, erhalten. Uretdiongruppen aufweisende Polyisocyanate weisen üblicherweise Funktionalitäten von 2 bis 3 auf. Dies umfasst auch Uretdion-/Isocyanurat-Gemische beliebiger Zusammensetzung, insbesondere mit einem Gehalt an monomerem Uretdion (Dimer) von 1-40%, insbesondere 3-15, insbesondere 5-10 %.
   Dazu können die Diisocyanate unter Reaktionsbedingungen umgesetzt werden, unter denen sowohl Uretdiongruppen als auch die anderen Polyisocyanate gebildet werden, oder zunächst die Uretdiongruppen gebildet und diese anschließend zu den anderen Polyisocyanaten umgesetzt werden oder die Diisocyanate zunächst zu den anderen Polyisocyanaten und diese anschließend zu Uretdiongruppen-haltigen Produkten umgesetzt werden.
3) Biuretgruppen aufweisende Polyisocyanate mit aromatisch, cycloaliphatisch oder aliphatisch gebundenen, bevorzugt cycloaliphatisch oder aliphatisch gebundenen Isocyanatgruppen, insbesondere Tris-(6-isocyanatohexyl)-biuret oder dessen Gemische mit seinen höheren Homologen. Diese Biuretgruppen aufweisenden Polyisocyanate weisen im Allgemeinen einen NCO-Gehalt von 18 bis 24 Gew.-% und eine mittlere NCO-Funktionalität von 2,8 bis 6 auf.
4) Urethan- und/oder Allophanatgruppen aufweisende Polyisocyanate mit aromatisch, aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Diisocyanat, beispielsweise Hexamethylendiisocyanat oder Isophorondiisocyanat, mit ein- oder mehrwertigen Alkoholen. Diese Urethan- und/oder Allophanat-gruppen aufweisenden Polyisocyanate haben im Allgemeinen einen NCO-Gehalt von 12 bis 24 Gew.-% und eine mittlere NCO-Funktionalität von 2,0 bis 4,5. Solche Urethan- und/oder Allophanatgruppen aufweisenden Polyisocyanate können unkatalysiert oder bevorzugt in Gegenwart von Katalysatoren, wie beispielsweise Ammoniumcarboxylaten oder -hydroxiden, oder Allophanatisierungskatalysatoren, z.B. Wismut-, Kobalt-, Cäsium-, Zn-(II)- oder Zr-(IV)-Verbindungen, jeweils in Anwesenheit von ein-, zwei- oder mehrwertigen, bevorzugt einwertigen Alkoholen, hergestellt werden.
   Diese Urethan- und/oder Allophanatgruppen aufweisenden Polyisocyanate treten häufig in Mischformen mit den unter 1) genannten Polyisocyanaten auf.
5) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid zugänglich.
6) Iminooxadiazindiongruppen enthaltende Polyisocyanate, vorzugsweise von Hexamethylendiisocyanat oder Isophorondiisocyanat abgeleitet. Solche Iminooxadiazindiongruppen enthaltenden Polyisocyanate sind aus Diisocyanaten mittels spezieller Katalysatoren herstellbar.
7) Hyperverzweigte Polyisocyanate, wie sie beispielsweise bekannt sind aus der DE-A1 10013186 oder DE-A1 10013187.
8) Polyurethan-Polyisocyanat-Präpolymere, aus Di- und/oder Polyisocyanaten mit Alkoholen.
9) Polyharnstoff-Polyisocyanat-Präpolymere.
10) Die Polyisocyanate 1)-9, bevorzugt 1), 3), 4) und 6) können nach deren Herstellung in Biuretgruppen- oder Urethan-/Allophanat-Gruppen aufweisende Polyisocyanate mit aromatisch, cycloaliphatisch oder aliphatisch gebundenen, bevorzugt (cyclo)aliphatisch gebundenen Isocyanatgruppen, überführt werden. Die Bildung von Biuretgruppen erfolgt beispielsweise durch Zugabe von Wasser oder Umsetzung mit Aminen. Die Bildung von Urethan- und/oder Allophanatgruppen erfolgt durch Umsetzung mit ein-, zwei- oder mehrwertigen, bevorzugt einwertigen Alkoholen, optional in Gegenwart von geeigneten Katalysatoren. Diese Biuret- oder Urethan-/Allophanatgruppen aufweisenden Polyisocyanate weisen im Allgemeinen einen NCO-Gehalt von 10 bis 25 Gew.-% und eine mittlere NCO-Funktionalität von 3bis 8 auf.
11) Hydrophil modifizierte Polyisocyanate, d.h. Polyisocyanate, die neben den unter 1-10 beschriebenen Gruppen solche enthalten, die formal durch Addition von Molekülen mit NCO-reaktiven Gruppen und hydrophilierenden Gruppen an die Isocyanatgruppen obiger Moleküle entstehen. Bei letzteren handelt es sich um nichtionische Gruppen wie Alkyl-Polyethylenoxid und/oder ionische, welche von Phosphorsäure, Phosphonsäure, Schwefelsäure oder Sulfonsäure, bzw. ihren Salzen abgeleitet sind.
12) Modifizierte Polyisocyanate für Dual Cure Anwendungen, d.h. Polyisocyanate, die neben den unter 1-11 beschriebenen Gruppen solche enthalten, die formal durch Addition von Molekülen mit NCO-reaktiven Gruppen und durch UV- oder aktinische Strahlung vernetzbare Gruppen an die Isocyanatgruppen obiger Moleküle entstehen. Bei diesen Molekülen handelt es sich beispielsweise um Hydroxyalkyl(meth)acrylate und andere Hydroxy-Vinylverbindungen.

In einer bevorzugten Ausführungsform der vorliegenden Erfindung ist das Polyisocyanat ausgewählt aus der Gruppe bestehend aus Isocyanuraten, Biureten, Urethanen und Allophanaten, bevorzugt aus der Gruppe bestehend aus Isocyanuraten, Urethanen und Allophanaten, besonders bevorzugt handelt es sich um ein isocyanuratgruppenhaltiges Polyisocyanat.

In einer besonders bevorzugten Ausführungsform handelt es sich bei dem Polyisocyanat um Isocyanuratgruppen enthaltende Polyisocyanate von 1,6-Hexamethylendiisocyanat und/oder Isophorondiisocyanat, ganz besonders bevorzugt auf Basis von 1,6-Hexamethylendiisocyanat.

In einer weiteren bevorzugten Ausführungsform handelt es sich bei dem Polyisocyanat um ein Gemisch von Isocyanuratgruppen enthaltenden Polyisocyanaten, ganz besonders bevorzugt von 1,6-Hexamethylendiisocyanat und von Isophorondiisocyanat.

In einer besonders bevorzugten Ausführungsform handelt es sich bei dem Polyisocyanat um ein Gemisch enthaltend niedrigviskose Polyisocyanate, bevorzugt Isocyanuratgruppen enthaltende Polyisocyanate, mit einer Viskosität von 600-1500 mPa*s, insbesondere unter 1200 mPa*s, niederviskose Urethane und/oder Allophanate mit einer Viskosität von 200-1600 mPa*s, insbesondere 600-1500 mPa*s, und/oder Iminooxadiazindiongruppen enthaltende Polyisocyanate.
In dieser Schrift wird die Viskosität bei 23 °C gemäß DIN EN ISO 3219/A.3 in einem Kegel-Platte-System mit einem Geschwindigkeitsgefälle von 1000 s⁻¹ angegeben, falls nicht anders vermerkt.

In einer bevorzugten Ausführungsform handelt es sich bei der Komponente (A) um ein Diisocyanat, ausgewählt aus der Gruppe bestehend aus Isophorondiisocyanat, 2,4'-Di(isocyanatocyclohexyl)methan und 4,4'-Di(isocyanatocyclo-hexyl)methan und deren Gemischen, besonders bevorzugt ausgewählt aus der Gruppe bestehend aus Isophorondiisocyanat und 4,4'-Di(isocyanatocyclohexyl)methan.

In einer weiteren bevorzugten Ausführungsform handelt es sich bei der Komponente (A) um Polyisocyanate, ausgewählt aus der Gruppe bestehend aus isocyanuratgruppenhaltigen Polyisocyanaten auf Basis von 1,6-Hexamethylendiisocyanat und biuretgruppenhaltigen Polyisocyanaten auf Basis von 1,6-Hexamethylendiisocyanat.

### Verbindung (B)

Bei der Verbindung (B) handelt es sich um mindestens eine, beispielsweise ein bis drei, bevorzugt ein bis zwei und besonders bevorzugt genau ein Verbindung mit mindestens einer, beispielsweise ein bis drei, bevorzugt ein bis zwei und besonders bevorzugt genau einer gegenüber Isocyanat reaktiven Gruppe und mindestens einer, bevorzugt ein bis drei, besonders bevorzugt ein bis zwei und ganz besonders bevorzugt genau einer Epoxygruppe.

Gegenüber Isocyanat reaktive Gruppen sind dabei Hydroxy- oder Thiolgruppen, bevorzugt Hydroxygruppen.

Bei der Verbindung (B) handelt es sich bevorzugt um Verbindungen der Formel (I) 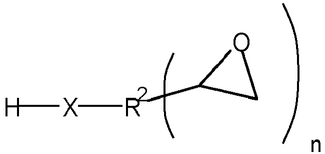 worin,
- X: für Sauerstoff (O) oder Schwefel (S), bevorzugt Sauerstoff (O),
- n: eine positive ganze Zahl von 1 bis 3, bevorzugt 1 oder 2 und besonders bevorzugt 1 und
- R²: für einen 1 bis 10 Atome und/oder Atomgruppen umfassenden, (n+1)-wertigen Spacer, bevorzugt eine 1 bis 10 Kohlenstoffatome aufweisende Alkylenkette, die optional durch andere Atome als Kohlenstoff, bevorzugt Sauerstoff oder Stickstoff, besonders bevorzugt Sauerstoff, unterbrochen sein kann, steht.

Beispiele für Verbindungen (B) mit n = 2 oder 3 sind

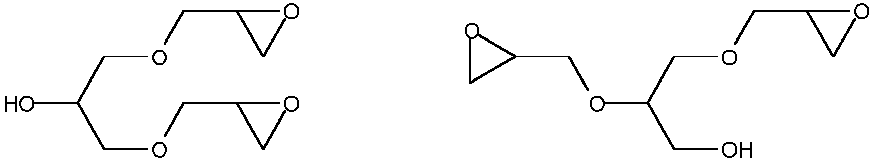

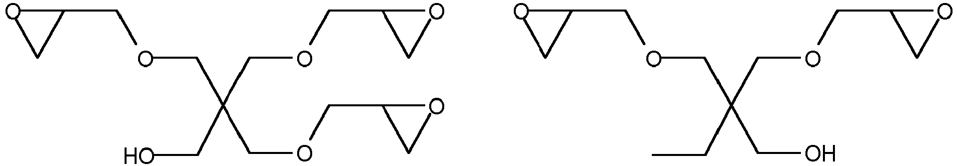

Bevorzugte Beispiele für R² mit n=1 sind Methylen, 1,2-Ethylen, 1,2-Propylen, 1,3-Propylen, 1,2-Butylen, 1,3-Butylen, 1,4-Butylen, 1,6-Hexylen, 1,8-Octylen, 1,10-Decylen, 2-Oxa-1,4-butylen und 2,5-Dioxa-1,7-heptylen. Besonders bevorzugt sind Methylen und 1,2-Ethylen.

Ganz besonders bevorzugt ist R² Methylen.

Bevorzugte Verbindungen (B) sind Glycerin diglycidylether, insbesondere dessen Gemisch aus Verbindungen mit freier primärer und freier sekundärer Hydroxygruppe, Trimethylolpropan diglycidylether, Pentaerythrit triglycidylether und Glycidol, besonders bevorzugt ist Glycidol.

### Verbindung (C)

Bei der Verbindung (C) handelt es sich um solche Verbindungen, die als Blockierungsmittel für die Blockierung von freien Isocyanatgruppen bekannt sind und die zusätzlich gegenüber einer Epoxygruppe reaktiv sind, d.h. eine Epoxygruppe zu öffnen vermögen.

Zur Blockierung eingesetzte Verbindungsklassen sind beschrieben in D. A. Wicks, Z. W. Wicks, Progress in Organic Coatings, 36, 148-172 (1999), 41, 1-83 (2001) sowie 43, 131-140 (2001).

Beispiele für zur Blockierung eingesetzte Verbindungsklassen sind Phenole, Imidazole, Triazole, Pyrazole, Oxime, N-Hydroxyimide, Hydroxybenzoesäureester, sekundäre Amine, Lactame, CH-acide cyclische Ketone, Malonsäureester oder Alkylacetoacetate.

Das Blockierungsmittel (C) ist ausgewählt aus der Gruppe bestehend aus
- cyclische sekundäre Amine, Di -C₁-C₁₀-alkylamine und Di -C₆-C₁₂-cycloalkyl-amine, bevorzugt Diethylamin, Diisopropylamin, Methylisopropylamin, Methylbutylamin, 2,6-Dimethylpiperidin, Dicyclohexylamine, Bis(3,5,5-trimethylcyclohexyl)amin, und 2,2,6,6-Tetramethylpiperidin
- Lactamen,
- besonders 2-Pyrrolidon und Caprolactam
- Oximen,
- besonders Oxime von Methyl-n-amylketon, Methylisoamylketon, Methyl-3-ethylheptylketon, Methyl-2,4-dimethylpentylketon, Butanon (Methylethylketon), Cyclohexanon, Methylisopropylketon, Methylisobutylketon, Diisobutylketon, Methyl-t-butyl keton, Diisopropylketon und 2,2,6,6-Tetramethylcyclohexanon, besonders bevorzugt Butanonoxim (Methylethylketonoxim),
- Pyrazolen,
- besonders 3,5-Dimethylpyrazol,
- Triazolen,
- besonders 1,2,4-Triazole,
- 1,3-Dicarbonylverbindungen,
- besonders Acetylaceton, Malonsäuredi-C₁-C₁₀-alkylester und Acetessigsäure-Ci-Cioalkylester, besonders bevorzugt Malonsäurediethylester und Acetessigsäureethylester.

Besonders bevorzugt handelt es sich bei den Blockierungsmitteln (C) um die oben aufgeführten sekundären Amine, Oxime, Pyrazole und 1,3-Dicarbonylverbindungen, ganz besonders bevorzugt handelt es sich um Di isopropyl amin, 2,6-Dimethylpiperidin, 2,2,6,6-Tetramethylpiperidin, Butanonoxim, Diethylmalonat und Acetessigsäureethylester.

Für die Herstellung der erfindungsgemäßen Polyurethane ist zu beachten, daß die Blockierungsmittel (C) sowohl gegenüber Isocyanatgruppen reaktiv sind also auch gegenüber Epoxygruppen. Mithin ist es bevorzugt, daß man mindestens ein Di- oder Polyisocyanat (A) zunächst teilweise mit mindestens einem Blockierungsmittel (C) umsetzt und anschließend die verbleibenden freien Isocyanatgruppen zumindest teilweise mit mindestens einer Verbindung (B) umsetzt. Vor Einsatz der Verbindung (B) im zweiten Schritt sollte das Blockierungsmittel (C) bereits im wesentlichen mit den Isocyanatgruppen abreagiert oder aus dem Reaktionsgemisch entfernt sein.

Das Verhältnis von Epoxygruppen in (B) zu gegenüber Epoxygruppen reaktiven Gruppen in (C) in den erfindungsgemäßen Polyurethanen beträgt in der Regel von 2:1 bis 1:2, bevorzugt von 1,5:1 bis 1:1,5, besonders bevorzugt von 1,5:1 bis 1:1, ganz besonders bevorzugt von 1,2:1 bis 1:1.

Das Verhältnis von gegenüber Isocyanat reaktiven Gruppen -XH in (B) und gegenüber Isocyanat reaktiven Gruppen in (C) in Summe zu Isocyanatgruppen in (A) wird in der Regel so gewählt, daß mindestens 50 mol% der Isocyanatgruppen in (A) mit Verbindungen (B) und (C) umgesetzt sind, bevorzugt mindestens 66 bis 100 mol%, besonders bevorzugt mindestens 75 bis 100 mol%, ganz besonders bevorzugt mindestens 85 bis 100 mol% und insbesondere 95 bis 100 mol%. In einer bevorzugten Ausführungsform sind im wesentlichen alle freien Isocyanatgruppen in (A) mit gegenüber Isocyanat reaktiven Gruppen aus (B) und (C) umgesetzt.

Bevorzugt erfolgt die Herstellung der erfindungsgemäßen Polyurethane, insbesondere die Umsetzung der Verbindung (B), aber auch der Verbindung (C), in Gegenwart mindestens eines Katalysators, wie er weiter unten aufgeführt ist.

Bevorzugt als Katalysatoren sind Lewis-saure organische Metallverbindungen wie Dibutylzinndilaurat, Dioctylzinn-dilaurat, Zink-(II)-diacetat, Zink-(II)-dioctoat, Zirkon-Acetylacetonat und Zirkon-2,2,6,6-tetra-methyl-3,5-heptandionat und Bismut-Verbindungen, aus toxikologischen Gründen, insbesondere die nicht-Zinn-haltigen Verbindungen.

Die Herstellung der erfindungsgemäßen Polyurethan erfolgt in der Regel bei Temperaturen von 40 °C bis 130 °C, bevorzugt 50 bis 120 und besonders bevorzugt 60 bis 100 °C.

Bevorzugt ist mindestens ein Lösungsmittel, wie weiter unten aufgeführt, bei der Herstellung anwesend, das bevorzugt auch in der Beschichtungsmasse verbleibt.

In einer bevorzugten Ausführungsform weisen erfindungsgemäße Polyurethane einen NCO-Gehalt von weniger als 7 Gew% (berechnet mit einem Molgewicht von 42 g/mol) auf. In diesem Fall erfordern die erfindungsgemäßen Polyurethane in Beschichtungsmassen nicht die Anwesenheit von Bindemitteln.

Derartige Polyurethane können dann bevorzugt in einkomponentigen Beschichtungsmassen verwendet werden.

In einer weiteren bevorzugten Ausführungsform weisen erfindungsgemäße Polyurethane einen NCO-Gehalt von mindestens 7 Gew% (berechnet mit einem Molgewicht von 42 g/mol) auf. Dies ist insbesondere dann bevorzugt, wenn den erfindungsgemäßen Polyurethanen in Beschichtungsmassen mindestens ein Bindemittel zugesetzt wird.

In einer bevorzugten Ausführungsform handelt es sich bei den erfindungsgemäßen Polyurethanen um Umsetzungsprodukte eines isocyanuratgruppenhaltigen Polyisocyanats auf Basis 1,6-Hexamethylendiisocyanat, bevorzugt auf Basis 1,6-Hexamethylendiisocyanat, mit einer Verbindung (B), bevorzugt der Formel (I), besonders bevorzugt Glycidol, und einem Blockierungsmittel (C), wobei das Polyurethan die Formel (II) 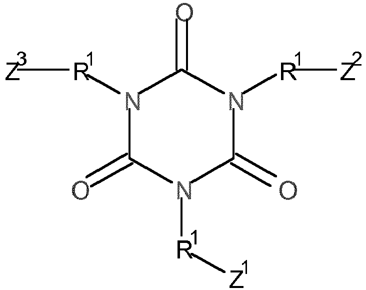 worin
R¹ jeweils für 1,6-Hexylen, 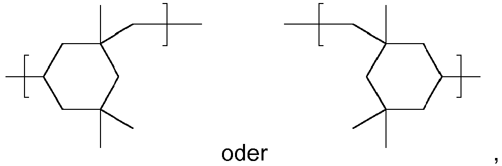 bevorzugt für 1,6-Hexylen steht und
Z¹, Z² und Z³ jeweils unabhängig voneinander ausgewählt ist aus der Gruppe bestehend aus
   - einer freien Isocyanatgruppe (-NCO),
   - einer blockierten Isocyanatgruppe und
   - einer Gruppe der Formel (III) 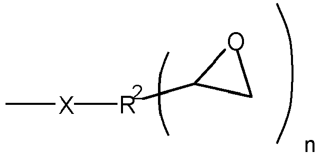
   aufweist, worin
X für Sauerstoff (O) oder Schwefel (S), bevorzugt Sauerstoff
   steht,
und n und R² wie oben definiert sind,
wobei mindestens eine der Gruppen Z¹ bis Z³ eine blockierte Isocyanatgruppe und mindestens eine der Gruppen Z¹ bis Z³ eine Gruppe der Formel (III) sind.

In einer besonders bevorzugten Ausführungsform handelt es sich bei dem erfindungsgemäßen Polyurethan um eines der Formel (IV) 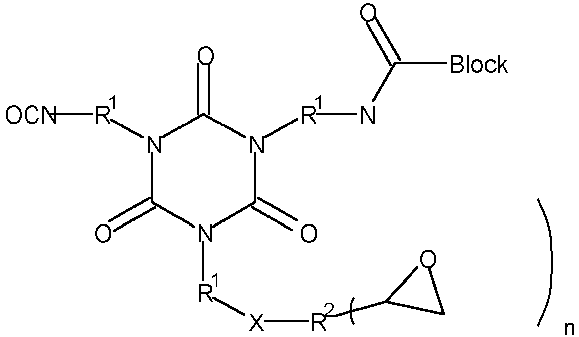 worin
Block für einen Rest eines Blockierungsmittels (C) steht, von dem ein Wasserstoffatom abstrahiert ist,
X für Sauerstoff (O) oder Schwefel (S),
R¹ jeweils für 1,6-Hexylen, 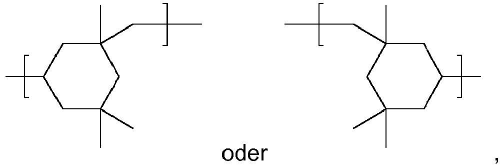 bevorzugt für 1,6-Hexylen steht und
n und R² wie oben definiert sind.

Beispiele für die Gruppe "Block" sind also
- für sekundäre Amine, hier am Beispiel des Diisopropylamins dargestellt, 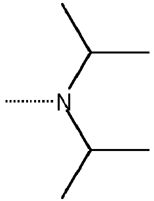
- für Lactame, hier am Beispiel des Caprolactams dargestellt, 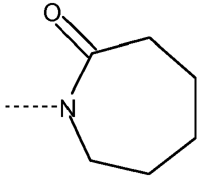
- für Oxime, hier am Beispiel des Methyl ethyl ketonoxims dargestellt, 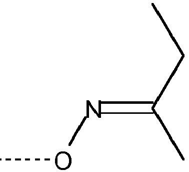
- für Pyrazole, hier am Beispiel des 3,5-Dimethylpyrazols dargestellt, 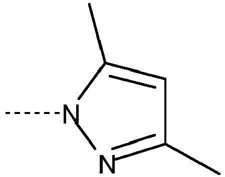
- für Triazole, hier am Beispiel des 1,2,4-Triazols dargestellt, 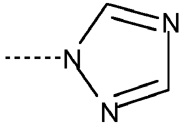
- sowie für 1,3-Dicarbonylverbindungen, hier am Beispiel des Diethylmalonats dargestellt,

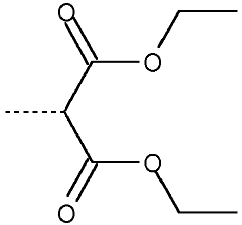

Die Bindung zur Isocyanatgruppe ist dabei gestrichelt dargestellt.

In einer weiteren bevorzugten Ausführungsform handelt es sich bei den erfindungsgemäßen Polyurethanen um Umsetzungsprodukte eines biuretgruppenhaltigen Polyisocyanats auf Basis 1,6-Hexamethylendiisocyanat, bevorzugt auf Basis 1,6-Hexamethylendiisocyanat, mit einer Verbindung (B), bevorzugt der Formel (I), besonders bevorzugt Glycidol, und einem Blockierungsmittel (C), wobei das Polyurethan die Formel (V) aufweist 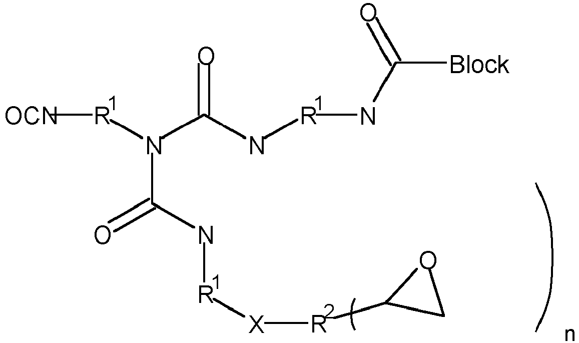 worin
Block für einen Rest eines Blockierungsmittels (C) steht, von dem ein Wasserstoffatom abstrahiert ist,
X für Sauerstoff (O) oder Schwefel (S),
R¹ jeweils für 1,6-Hexylen steht und
n und R² wie oben definiert ist.

Des Weiteren kann optional noch ein Lösungsmittel oder Lösungsmittelgemisch anwesend sein.

Als Lösungsmittel einsetzbar sind solche, die bevorzugt keine gegenüber Isocyanatgruppen oder verkappten Isocyanatgruppen reaktiven Gruppen aufweisen.

Mögliche Lösungsmittel sind z.B. Ester, Ether, Ketone, aromatische Lösungsmittel, alkoxylierte Alkansäurealkylester, Carbonate, respektive Gemische der Lösungsmittel.

Ester sind beispielsweise n-Butylacetat, Ethylacetat, 1-Methoxypropylacetat-2 und 2-Methoxyethylacetat.

Ether sind beispielsweise THF, Dioxan sowie die Dimethyl-, -ethyl- oder -n-butylether von Ethylenglykol, Diethylenglykol, Triethylenglykol, Propylenglykol, Dipropylenglykol oder Tripropylenglykol.

Ketone sind beispielsweise Aceton, Ethylmethylketon, Diethylketon, Isobutylmethylketon, Methylamylketon und tert-Butylmethylketon. Aceton ist wegen seines Flammpunkts weniger bevorzugt.

Als aromatischer Kohlenwasserstoff sind insbesondere Xylol und Toluol bevorzugt, insbesondere Xylol. Beispiele dafür sind die Solvesso®-Marken der Firma ExxonMobil Chemical, besonders Solvesso® 100 (CAS-Nr. 64742-95-6, überwiegend Cg und C₁₀-Aromaten, Siedebereich etwa 154 - 178 °C), 150 (Siedebereich etwa 182 -207 °C) und 200 (CAS-Nr. 64742-94-5), sowie die Shellsol®-Marken der Firma Shell, Caromax® (z.B. Caromax® 18) der Firma Petrochem Carless und Hydrosol der Firma DHC (z.B. als Hydrosol® A 170).

Weitere mögliche Lösungsmittel sind Butylglykoldiacetat (Merck Schuchardt OHG), Butylglykolacetat (Merck Schuchardt OHG), Dipropylenglykoldimethylether (Proglyde® DMM, Sigma-Aldrich, Deutschland), 3-Methoxy-n-butylacetat (Butoxyl, F.B. Silbermann GmbH), Dipropylenglykol-n-butylether (BDG, Dowanol® DPnB, Dow Chemical Company) und Propylencarbonat.

Auch können Alkohole als Lösungsmittel eingesetzt werden, sollten aber in der Menge klein gehalten werden, insbesondere, wenn es sich um monofunktionelle Alkohole handelt. Alkohole sind weniger bevorzugt.

Bevorzugte Lösungsmittel sind n-Butylacetat, Ethylacetat, 1-Methoxypropylacetat-2, 2-Methoxyethylacetat, Xylol, Toluol, sowie deren Gemische.

Als weitere lacktypische Komponenten und/oder Additive können beispielsweise verwendet werden: Stabilisatoren, UV-Stabilisatoren wie UV-Absorber und geeignete Radikalfängern (insbesondere HALS-Verbindungen, Hindered Amin Light Stabilizer), Aktivatoren (Beschleuniger), Trockenmittel, Füllmittel, Pigmente, Farbstoffe, antistatische Agenzien, Flammschutzmittel, Verdicker, thixotrope Agenzien, oberflächenaktive Agenzien, Viskositätsmodifikatoren, Plastifizierer oder Chelatbildner. Bevorzugt sind UV-Stabilisatoren.

Geeignete UV-Absorber umfassen Oxanilide, Triazine und Benzotriazol (letztere erhältlich z.B. als Tinuvin® -Marken der BASF SE) und Benzophenone (z.B. Chimassorb® 81 der BASF SE). Bevorzugt sind z.B. 95 % Benzolpropansäure, 3-(2H-Benzotriazol-2-yl)-5-(1,1-dimethylethyl)-4-hydroxy-, C7-9-verzweigte und lineare Alkylester; 5 % 1-Methoxy-2-propylacetat (z.B. Tinuvin® 384) und α-[3-[3-(2H-Benzotriazol-2-yl)-5-(1,1,-dimethylethyl)-4-hydroxyphenyl]-1-oxopropyl]-ω-hydroxypoly(oxo-1,2-ethanediyl) (z.B. Tinuvin® 1130), jeweils Produkte z.B. der BASF SE. DL-Alpha-Tocopherol, Tocopherol, Zimtsäurederivate und Cyanoacrylate können ebenfalls zu diesem Zweck eingesetzt werden.

Diese können allein oder zusammen mit geeigneten Radikalfängern, beispielsweise sterisch gehinderten Aminen (oft auch als HALS -oder HAS-Verbindungen bezeichnet; Hindered Amine (Light) Stabilizer) wie 2,2,6,6-Tetramethylpiperidin, 2,6-Di-tert.-butylpiperidin oder deren Derivaten, z. B. Bis-(2,2,6,6-tetra-methyl-4-piperidyl)sebacinat, eingesetzt werden. Diese sind z.B. erhältlich als Tinuvin®- und Chimassorb®-Marken der BASF SE. Bevorzugt im gemeinsamen Einsatz mit Lewis-Säuren sind jedoch solche gehinderten Amine, die N-alkyliert sind, beispielsweise Bis (1,2,2,6,6-pentamethyl-4-piperidinyl)-[[3,5-bis(1,1-dimethylethyl)-4-hydroxyphenyl]-methyl]butylmalonat (z.B. Tinuvin® 144 der BASF SE); eine Mischung aus Bis(1,2,2,6,6-Pentamethyl-4-Piperidinyl)sebacat und Methyl(1,2,2,6,6-Pentamethyl-4-Piperidinyl)sebacat (z.B. Tinuvin® 292 der BASF SE); oder die N-(O-alkyliert) sind, wie z.B. Dekandisäure,bis(2,2,6,6-tetramethyl-1-(octyloxy)-4-piperidinyl)ester, Reaktionsprodukte mit 1,1-Dimethylethylhydroperoxyd und Oktan (z.B. Tinuvin® 123 der BASF SE).UV-Stabilisatoren werden üblicherweise in Mengen von 0,1 bis 5,0 Gew.-%, bezogen auf die in der Zubereitung enthaltenen festen Komponenten, eingesetzt.

Als Verdicker kommen neben radikalisch (ko)polymerisierten (Ko)Polymerisaten, übliche organische und anorganische Verdicker wie Hydroxymethylcellulose oder Bentonit in Betracht.

Als Chelatbildner können z.B. Ethylendiaminessigsäure und deren Salze sowie β-Diketone verwendet werden.

Pigmente im eigentlichen Sinne sind gemäß CD Römpp Chemie Lexikon - Version 1.0, Stuttgart/New York: Georg Thieme Verlag 1995 unter Verweis auf DIN 55943 partikelförmige "im Anwendungsmedium praktisch unlösliche, anorganische oder organische, bunte oder unbunte Farbmittel".

Praktisch unlöslich bedeutet dabei eine Löslichkeit bei 25 °C unter 1 g / 1000 g Anwendungsmedium, bevorzugt unter 0,5, besonders bevorzugt unter 0,25, ganz besonders bevorzugt unter 0,1 und insbesondere unter 0,05 g / 1000 g Anwendungsmedium.

Beispiele für Pigmente im eigentlichen Sinne umfassen beliebige Systeme von Absorptions- und/oder Effektpigmenten, bevorzugt Absorptionspigmente. Anzahl und Auswahl der Pigmentkomponenten sind dabei keinerlei Beschränkungen unterworfen. Sie können den jeweiligen Erfordernissen, beispielsweise dem gewünschten Farbeindruck, beliebig angepasst werden, beispielsweise wie in Schritt a) beschrieben. Beispielsweise können alle Pigmentkomponenten eines standardisierten Mischlacksystems zugrunde liegen.

Unter Effektpigmenten sind alle Pigmente zu verstehen, die einen plättchenförmigen Aufbau zeigen und einer Oberflächenbeschichtung spezielle dekorative Farbeffekte verleihen. Bei den Effektpigmenten handelt es sich beispielsweise um alle in der Fahrzeug- und Industrielackierung üblicherweise einsetzbaren effektgebenden Pigmente. Beispiele für derartige Effektpigmente sind reine Metallpigmente; wie z.B. Aluminium-, Eisen- oder Kupferpigmente; Interferenzpigmente, wie z.B. titandioxidbeschichteter Glimmer, eisenoxidbeschichteter Glimmer, mischoxidbeschichteter Glimmer (z.B. mit Titandioxid und Fe₂O₃ oder Titandioxid und Cr₂O₃), metalloxidbeschichtetes Aluminium, oder Flüssigkristallpigmente.

Bei den farbgebenden Absorptionspigmenten handelt es sich beispielsweise um übliche in der Lackindustrie einsetzbare organische oder anorganische Absorptionspigmente. Beispiele für organische Absorptionspigmente sind Azopigmente, Phthalocyanin-, Chinacridon- und Pyrrolopyrrolpigmente. Beispiele für anorganische Absorptionspigmente sind Eisenoxidpigmente, Titandioxid und Ruß.

Farbstoffe sind ebenfalls Farbmittel und unterscheiden sich von den Pigmenten durch ihre Löslichkeit im Anwendungsmedium, d.h. sie weisen bei 25 °C eine Löslichkeit über 1 g / 1000 g im Anwendungsmedium auf.

Beispiele für Farbstoffe sind Azo-, Azin-, Anthrachinon-, Acridin-, Cyanin-, Oxazin-, Polymethin-, Thiazin-, Triarylmethan-Farbstoffe. Diese Farbstoffe können Anwendung finden als basische oder kationische Farbstoffe, Beizen-, Direkt-, Dispersions-, Entwicklungs-, Küpen-, Metallkomplex-, Reaktiv-, Säure-, Schwefel-, Kupplungs- oder Substantive Farbstoffe.

Als koloristisch inerte Füllstoffe sind alle Stoffe/Verbindungen zu verstehen, die einerseits koloristisch unwirksam sind; d.h. die eine geringe Eigenabsorption zeigen und deren Brechzahl ähnlich der Brechzahl des Beschichtungsmediums ist, und die andererseits in der Lage sind, die Orientierung (parallele Ausrichtung) der Effektpigmente in der Oberflächenbeschichtung, d.h. im applizierten Lackfilm, zu beeinflussen, ferner Eigenschaften der Beschichtung oder der Beschichtungsmassen, beispielsweise Härte oder Rheologie. Im Folgenden sind beispielhaft einsetzbare inerte Stoffe/Verbindungen genannt, ohne jedoch den Begriff koloristisch inerte topologiebeeinflussende Füllstoffe auf diese Beispiele zu beschränken. Geeignete inerte Füllstoffe entsprechend der Definition können beispielsweise transparente oder semitransparente Füllstoffe oder Pigmente sein, wie z.B. Kieselgele, Blancfixe, Kieselgur, Talkum, Calciumcarbonate, Kaolin, Bariumsulfat, Magnesiumsilikat, Aluminiumsilikat, kristallines Siliziumdioxid, amorphe Kieselsäure, Aluminiumoxid, Mikrokugeln oder Mikrohohlkugeln z.B. aus Glas, Keramik oder Polymeren mit Größen von beispielsweise 0,1-50 µm. Weiterhin können als inerte Füllstoffe beliebige feste inerte organische Partikel, wie z.B. Harnstoff-Formaldehyd-Kondensationsprodukte, mikronisiertes Polyolefinwachs und mikronisiertes Amidwachs, eingesetzt werden. Die inerten Füllstoffe können jeweils auch in Mischung eingesetzt werden. Bevorzugt wird jedoch jeweils nur ein Füllstoff eingesetzt.

Bevorzugte Füllstoffe umfassen Silikate, z. B. durch Hydrolyse von Siliciumtetrachlorid erhältliche Silikate wie Aerosil® der Fa. Degussa, Kieselerde, Talkum, Aluminiumsilikate, Magnesiumsilikate, Calciumcarbonate etc.

Weiterer optionaler Bestandteil der Beschichtungsmasse ist ein Katalysator. In einer bevorzugten Ausführungsform ist mindestens ein Katalysator anwesend. Dabei kann es sich zum Beispiel um ein Amin oder bevorzugt eine metallorganische Verbindung halten. Bevorzugte Katalysatoren sind solche, die auch die Deblockierung der erfindungsgemäßen Polyurethane katalysieren.

Amine sind beispielsweise tertiäre aliphatische, cycloaliphatische oder aromatische Amine. Beispiele dafür sind Triethylamin, Tri-n-butylamin, N-Methylmorpholin, N-Methyl piperidin, Pyrrolidin, Imidazol, Chinuclidin, bevorzugt 1,4-Di-aza-bicyclo-[2.2.2]-octan.

Als Metallorganische Verbindung kommen z.B. Zinnverbindungen in Frage, wie beispielsweise Zinn-(II)-salze von organischen Carbonsäuren, z.B. Zinn-(II)-diacetat, Zinn-(II)-dioctoat, Zinn-(II)-bis(ethylhexanoat) und Zinn-(II)-dilaurat und die toxikologisch bedenklichen Dialkylzinn-(IV)-salze von organischen Carbonsäuren, z.B. Dimethylzinn-diacetat, Dibutylzinn-diacetat, Dibutylzinn-dibutyrat, Dibutylzinn-bis(2-ethylhexanoat), Dibutylzinn-dilaurat, Dibutylzinn-maleat, Dioctylzinn-dilaurat und Dioctylzinn-diacetat, insbesondere Dibutylzinn-dilaurat.

Weitere und stärker bevorzugte Lewis-saure organische Metallverbindungen sind Zinksalze, beispielsweise Zink-(II)-diacetat und Zink-(II)-dioctoat.

Als Zinn- und Zink-freie Alternativen werden bevorzugt u.a. organische Metallsalze des Bismuts, Zirkons, Titans, Aluminiums, Cers, Cäsiums, Eisens, Mangans, Nickels und Cobalts eingesetzt.

Dies sind z.B. Zirkoniumtetraacetylacetonat (z.B. K-KAT® 4205 der Firma King Industries); Zirkoniumdionate (z.B. K-KAT® XC-9213; XC-A 209 und XC-6212 der Firma King Industries); Bismut-Verbindungen, insbesondere Tricarboxylate (z.B. K-KAT® 348, XC-B221; XC-C227, XC 8203 der Firma King Industries); Aluminiumdionat (z.B. K-KAT® 5218 der Firma King Industries). Zinn- und Zink-freie Katalysatoren werden ansonsten z.B. auch unter dem Handelsnamen Borchi® Kat der Firma Borchers, TK der Firma Goldschmidt oder BICAT® der Firma Shepherd, Lausanne angeboten.

Bismut-Katalysatoren sind insbesondere Bismut-carboxylate, insbesondere Bismut-octoate, - ethylhexanoate, -neodecanoate, oder -pivalate; beispielsweise K-KAT 348 und XK-601 von King Industries, TIB KAT 716, 716LA, 716XLA, 718, 720, 789 von TIB Chemicals und solchen von Shepherd Lausanne, sowie Katalysator-Mischungen von z.B. Bismut- und Zink-Organylen.

Weitere Metallkatalysatoren werden von Blank et al. in Progress in Organic Coatings, 1999, Vol. 35, Seiten 19-29 beschrieben.

Diese Katalysatoren sind je nach dem für lösungsmittel-, wasser-basierte und/oder blockierte Systeme geeignet.

Molybdän-, Wolfram- und Vanadium-Katalysatoren, werden insbesondere für den Umsatz blockierter Polyisocyanate unter WO 2004/076519 und WO 2004/076520 beschrieben.

Bevorzugte Lewis-saure organische Metallverbindungen sind Dibutylzinn-dilaurat, Dioctylzinn-dilaurat, Zink-(II)-diacetat, Zink-(II)-dioctoat, Zirkon-Acetylacetonat und Zirkon-2,2,6,6-tetramethyl-3,5-heptandionat und Bismut-Verbindungen, aus toxikologischen Gründen, insbesondere die nicht-Zinn-haltigen Verbindungen.

Die Beschichtung der Substrate erfolgt nach üblichen, dem Fachmann bekannten Verfahren, wobei man wenigstens eine Beschichtungsmasse auf das zu beschichtende Substrat in der gewünschten Stärke aufbringt und die optional enthaltenen flüchtigen Bestandteile der Beschichtungsmasse, optional unter Erhitzen, entfernt. Dieser Vorgang kann gewünschten falls ein- oder mehrfach wiederholt werden. Das Aufbringen auf das Substrat kann in bekannter Weise, z. B. durch Spritzen, Spachteln, Rakeln, Bürsten, Rollen, Walzen, Gießen, Laminieren, Hinterspritzen oder Koextrudieren erfolgen.

Die Dicke einer solchen zu härtenden Schicht kann von 0,1 µm bis mehrere mm betragen (z.B. (Struktur)klebstoffe, Gießböden, Grundierungen, Spachtel). Bevorzugt sind 5 bis 200 µm, besonders bevorzugt von 5 bis 60 µm, insbesondere bevorzugt 20-50 µm (bezogen auf die Beschichtung im Zustand in der das Lösungsmittel aus dem System entfernt ist).

Es stellt eine bevorzugte Ausführungsform der vorliegenden Erfindung dar, daß mit Hilfe der erfindungsgemäßen Beschichtungsmassen Beschichtungen in einer Dicke von 0,5 bis 10 mm erhalten werden können. Aus der Beschichtung abgespaltenes Blockierungsmittel führt bei den erfindungsgemäßen Beschichtungsmassen nicht zu einer Bläschenbildung.

Die erfindungsgemäßen Polyurethanbeschichtungenwerden hergestellt, indem man mindestens ein erfindungsgemäßes Polyurethan, optional vermischt mit mindestens einem weiteren Polyisocyanat, wie oben unter Verbindung (A) aufgeführt, das ein anderes als das erfindungsgemäße Polyurethan ist, auf ein Substrat aufbringt, und auf eine Temperatur erwärmt, bei der zumindest ein Teil der blockierten Isocyanatgruppen signifikant in freie Isocyanatgruppen und freies Blockierungsmittel (C) gespalten wird.

Mit "signifikant" ist hier zumindest 10 mol% der blockierten Isocyanatgruppen gemeint, bevorzugt mindestens 25, besonders bevorzugt mindestens 40, ganz besonders bevorzugt mindestens 50, insbesondere mindestens 66 und speziell mindestens 75 mol%.

Die Temperatur für die Härtung der Beschichtung und Deblockierung hängt dabei jeweils von dem eingesetzten Blockierungsmittel (C) ab und kann bevorzugt von 100 bis 160 °C betragen. Die Dauer beträgt in der Regel von 5 Minuten bis 3 Stunden, bevorzugt 10 Minuten bis 2,5 Stunden und besonders bevorzugt 15 Minuten bis 2 Stunden.

Unter diesen Bedingungen wird das Blockierungsmittel (C) aus der blockierten Isocyanatgruppe freigesetzt, so daß die nunmehr freie Isocyanatgruppe zur Reaktion bereitsteht, und das Blockierungsmittel reagiert mit der Epoxygruppe der Komponente (B).

Es wird vermutet, daß als Zwischenprodukt bei dieser Härtung eine Verbindung der folgenden Formel durchlaufen wird (hier dargestellt am Beispiel eine isocyanuratgruppenhaltigen Polyisocyanats.) 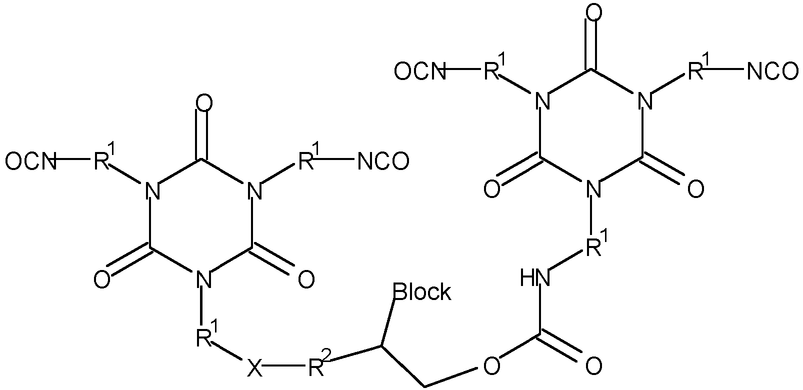 worin R¹, R², X und Block die obigen Bedeutungen aufweisen und n=1 ist.

Dabei wird das Blockierungsmittel (C) aus der blockierten Isocyanatgruppe freigesetzt und reagiert mit der Epoxygruppe der Komponente (B). Die sich bei dieser Reaktion mit der Epoxygruppe bildende Hydroxygruppe reagiert dann mit einer freien Isocyanatgruppe unter Ausbildung einer Urethangruppe.

Ein weiterer optional Bestandteil solcher Beschichtungsmassen kann ein weitere Polyisocyanat (D) sein, das ein anderes als das erfindungsgemäße Polyurethan ist, und bei dem es sich um solche Di- oder Polyisocyanate handeln kann, wie sie oben unter der Komponente (A) beschrieben sind.

Weiterhin sind auch Substrate, beschichtet mit einer erfindungsgemäßen Beschichtungsmasse Gegenstand der vorliegenden Erfindung.

Besonders geeignet sind solche Polyurethanlacke für Anwendungen, in denen eine besonders hohe Applikationssicherheit, Außenwitterungsbeständigkeit, Optik, Lösemittel-, Chemikalien- und/oder Wasserfestigkeit gefordert werden.

Die erhaltenen zweikomponentigen Beschichtungsmassen und Lackformulierungen eignen sich zum Beschichten von Substraten wie Holz, Holzfurnier, Papier, Pappe, Karton, Textil, Folie, Leder, Vlies, Kunststoffoberflächen, Glas, Keramik, mineralischen Baustoffen, wie Zement-Formsteine und Faserzementplatten oder Metallen, die jeweils optional vorbeschichtet bzw. vorbehandelt sein können.

Die Auswahl des Substrats ist in der Regel durch dessen thermische Stabilität begrenzt, so daß solche Substrate bevorzugt sind, die unter den Bedingungen der Deblockierung stabil sind.

Derartige Beschichtungsmassen eignen sich als oder in Innen- oder Außenbeschichtungen, also solche Anwendungen, die dem Tageslicht ausgesetzt sind, bevorzugt von Gebäudeteilen, Beschichtungen auf (Groß-)Fahrzeugen und Flugzeugen und industriellen Anwendungen, Nutzfahrzeuge im landwirtschaftlichen und Baubereich, Dekolackierungen, Brücken, Gebäuden, Strommasten, Tanks, Containern, Pipelines, Kraftwerken, chemischen Anlagen, Schiffen, Kränen, Pfählen, Spundwänden, Armaturen, Rohren, Fittings, Flanschen, Kupplungen, Hallen, Dächern und Baustahl, Möbeln, Fenstern, Türen, Parkett, Can-Coating und Coil-Coating, für Bodenbeläge, wie bei Parkdecks oder in Krankenhäusern in Automobillacken als OEM und refinish-Anwendung.

In dieser Schrift verwendete ppm- und Prozentangaben beziehen sich, falls nicht anders angegeben, auf Gewichtsprozente und -ppm.

Die folgenden Beispiele sollen die Erfindung erläutern, aber nicht auf diese Beispiele einschränken.

### Beispiele

### Rohstoffe:

Basonat® HI 100: kommerziell von der BASF SE, Ludwigshafen, erhältliches isocyanuratgruppenhaltiges Polyisocyanat auf Basis 1,6-Hexamethylendiisocyanat mit einem NCO-Gehalt von 21,8% und einer Viskosität von 2800 mPa*s bei 23°C.

### Beispiel:

### Beispiel 1: Basonat HI + Diisopropylamin + Glycidol

Es wurden 404,6g Basonat® HI 100 und 106,05g Diisopropylamin in 252,15g Butylacetat umgesetzt. Nach ca. 1 Stunde bei Raumtemperatur betrug der NCO-Gehalt 5,9%. Anschließend, wurden 77,7g Glycidol und 27 ppm Dibutylzinndilaurat zugegeben. Nach ca. 6 Stunden bei 60°C betrug der NCO-Gehalt 0,0%. Das entsprechende Produkt hatte eine Viskosität von 1600 mPas.

### Vergleichsbeispiel 1:

Produkt 1a: Es wurden 143,3g Basonat® HI 100 und 75,8g Diisopropylamin in 93,9g Butylacetat umgesetzt. Nach 80 Minuten bei Raumtemperatur betrug der NCO-Gehalt 0,0%.

Produkt 1b: Es wurden 143,3g Basonat® HI 100 und 55,00g Glycidol in Anwesenheit von 50,3g Butylacetat und 27 ppm Dibutylzinndilaurat umgesetzt. Nach 80 Minuten bei 60°C betrug der NCO-Gehalt 0,0%.

Die zwei Produkte wurden gemischt, die Mischung ergab eine inhomogene trübe Lösung.

### Beispiel 2:

Es wurden 144,5g Basonat® HI 100, 83,3g Isophorondiisocyanat und 75,8g Diisopropylamin in 153,9g Butylacetat umgesetzt. Nach 20 Minuten bei Raumtemperatur betrug der NCO-Gehalt 7,1%. Anschließend, wurden 55,5g Glycidol und 27 ppm Dibutylzinndilaurat zugegeben. Nach ca. 6 Stunden bei 60°C betrug der NCO-Gehalt 0,0%. Das entsprechende Produkt hatte eine Viskosität von 1300 mPas.

### Beispiel 3:

Es wurden 144,5g Basonat® HI 100, 98,3g 1-Isocyanato-4-[(4'-isocyanatocyclohexyl) methyl]-cyclohexan (H12MDI) und 75,8g Diisopropylamin in 160,3g Butylacetat umgesetzt. Nach 20 Minuten bei Raumtemperatur betrug der NCO-Gehalt 6,8%. Anschließend, wurden 55,5g Glycidol und 27 ppm Dibutylzinndilaurat zugegeben. Nach ca. 6 Stunden bei 60°C betrug der NCO-Gehalt 0,0%. Das entsprechende Produkt hatte eine Viskosität von 1640 mPas bei 23°C.

### Beispiel 4:

Es wurden 202,3g Basonat® HI 100 und 45,7g N-Methylbutylamin in 122,9g Butylacetat umgesetzt. Nach 20 Minuten bei Raumtemperatur betrug der NCO-Gehalt 6,0%. Anschließend, wurden 38,9g Glycidol und 56 ppm Dibutylzinndilaurat zugegeben. Nach ca. 6 Stunden bei 60°C betrug der NCO-Gehalt 0,0%. Das entsprechende Produkt hatte eine Viskosität von 2100 mPas bei 23°C.

### Beispiel 5:

Es wurden 404,6g Basonat® HI 100 und 92,4g 2-Butanonoxim in 245,9g Butylacetat umgesetzt. Nach 20 Minuten bei Raumtemperatur betrug der NCO-Gehalt 6,0%. Anschließend, wurden 77,7g Glycidol und 28 ppm Dibutylzinndilaurat zugegeben. Nach ca. 6 Stunden bei 60°C betrug der NCO-Gehalt 0,0%. Das entsprechende Produkt hatte eine Viskosität von 2100 mPas bei 23°C.

### Beispiel 6:

Es wurden 404,6g Basonat® HI 100 und 100,8 g 3,5-Dimethylpyrazol in 249,9g Butylacetat umgesetzt. Nach 20 Minuten bei Raumtemperatur betrug der NCO-Gehalt 6,0%. Anschließend, wurden 77,7g Glycidol und 28 ppm Dibutylzinndilaurat zugegeben. Nach ca. 6 Stunden bei 60°C betrug der NCO-Gehalt 0,0%. Das entsprechende Produkt hatte eine Viskosität von 2100 mPas bei 23°C.

### Beispiel 7:

Es wurden 144,5g Basonat® HI 100 und 50,5g Diisopropylamin in 105,4g Butylacetat umgesetzt. Nach 30 Minuten bei Raumtemperatur betrug der NCO-Gehalt 3,1%. Anschließend, wurde mit 51,0g Glycerindiglycidylether bei 60°C reagieren gelassen.

### Prüfungen:

Zur Messung der Pendeldämpfung wurden die Proben in einer Nass-Schichtdicke von 400 µm auf Glasplatten aufgetragen, 15 min bei Raumtemperatur abgelüftet und bei der in der Tabelle angegebenen Temperatur und Dauer gehärtet.

Die Messung der Pendeldämpfung erfolgte gemäß DIN 53157, hohe Werte bedeuten hohe Härte. Angegeben wird der Mittelwert aus drei Messungen.

| **Zusammensetzung** | **Härtung** | | **Pendeldämpfung** |
|---|---|---|---|
| | **Temp.** | **Zeit** | **Schläge** |
| Beispiel 1 | 110 °C | 30 min | 2 |
| | " | 60 min | 2 |
| | " | 120 min | 4 |
| | 130 °C | 30 min | 5 |
| | " | 60 min | 16 |
| | " | 120 min | 55 |
| | 150 °C | 30 min | 7 |
| | " | 60 min | 113 |
| | " | 120 min | 122 |
| Beispiel 2 | 110 °C | 30 min | 26 |
| | " | 60 min | 26 |
| | " | 120 min | 57 |
| | 130 °C | 30 min | 38 |
| | " | 60 min | 85 |
| | " | 120 min | 117 |
| | 150 °C | 30 min | 49 |
| | " | 60 min | 133 |
| | " | 120 min | 130 |
| Beispiel 3 | 110 °C | 30 min | 21 |
| | " | 60 min | 35 |
| | " | 120 min | 65 |
| | 130 °C | 30 min | 62 |
| | " | 60 min | 74 |
| | " | 120 min | 120 |
| | 150 °C | 30 min | 66 |
| | " | 60 min | 130 |
| | " | 120 min | 121 |
| Beispiel 4 | 110 °C | 30 min | 2 |
| | " | 60 min | 4 |
| | " | 120 min | 12 |
| | 130 °C | 30 min | 10 |
| | " | 60 min | 23 |
| | " | 120 min | 44 |
| | 150 °C | 30 min | 15 |
| | " | 60 min | 26 |
| | " | 120 min | 45 |

### Anwendungsbeispiel

Die Härtung der Beschichtungsmasse aus Beispiel 1 wurde mit verschiedenen Katalysatoren (0,5 Gew% Katalysator) wiederholt.

| **Katalysator** | **Härtung** | | **Pendeldämpfung** |
|---|---|---|---|
| | **Temp.** | **Zeit** | **Schläge** |
| Ohne Katalysator | 130 °C | 120 min | 56 |
| 1,4-Diazabicyclo[2.2.2]octan (TEDA) | 130 °C | 120 min | 131 |
| Zinn-2-ethylhexanoat | 130 °C | 120 min | 97 |
| Aluminiumtributylat | 130 °C | 120 min | 72 |
| Imidazol | 130 °C | 120 min | 125 |

## Patentansprüche

1. Polyurethane, erhältlich durch Umsetzung von
(A) mindestens einem aliphatischen oder cycloaliphatischen Di- oder Polyisocyanat,
(B) mindestens einer Verbindung mit mindestens einer, bevorzugt genau einer Hydroxy- oder Thiolgruppe und mindestens einer Epoxygruppe, sowie
(C) mindestens ein Blockierungsmittel mit einer Gruppe, die sowohl gegenüber einer Isocyanatgruppe als auch gegenüber einer Epoxygruppe reaktiv ist,
wobei die Verbindung (C) ausgewählt ist aus der Gruppe bestehend aus
- cyclische sekundäre Amine, Di -C₁-C₁₀-alkylamine und Di -C₆-C₁₂-cycloalkylamine, bevorzugt Diethylamin, Diisopropylamin, Methylisopropyl-amin, Methylbutylamin, 2,6-Dimethylpiperidin, Dicyclohexylamine, Bis(3,5,5-trimethylcyclohexyl)amin, und 2,2,6,6-Tetramethylpiperidin
- Lactamen,
- besonders 2-Pyrrolidon und Caprolactam
- Oximen,
- besonders Oxime von Methyl-n-amyl keton, Methylisoamylketon, Methyl-3-ethylheptylketon, Methyl-2,4-dimethylpentylketon, Butanon (Methylethylketon), Cyclohexanon, Methylisopropylketon, Methylisobutylketon, Diisobutylketon, Methyl-t-butylketon, Diisopropylketon und 2,2,6,6-Tetramethylcyclohexanon, besonders bevorzugt Butanonoxim (Methyl ethyl keton oxim),
- Pyrazolen,
- besonders 3,5-Dimethylpyrazol,
- Triazolen,
- besonders 1,2,4-Triazole,
- 1,3-Dicarbonylverbindungen,
- besonders Acetylaceton, Malonsäuredi-C₁-C₁₀-alkylester und Acetessigsäure-Ci-Cioalkylester, besonders bevorzugt Malonsäurediethylester und Acetessigsäureethylester.

2. Polyurethane gemäß Anspruch 1, **dadurch gekennzeichnet, daß** die Verbindung (A) ausgewählt ist aus der Gruppe bestehend aus Isophorondiisocyanat, 2,4'-Di(isocya-natocyclohexyl)methan und 4,4'-Di(isocyanatocyclohexyl)methan sowie deren Gemischen.

3. Polyurethane gemäß Anspruch 1, **dadurch gekennzeichnet, daß** die Verbindung (A) ausgewählt ist aus der Gruppe bestehend aus isocyanuratgruppenhaltigen Polyisocyanaten auf Basis von 1,6-Hexamethylendiisocyanat und/oder Isophorondiisocyanat und biuretgruppenhaltigen Polyisocyanaten auf Basis von 1,6-Hexamethylendiisocyanat.

4. Polyurethane gemäß Anspruch 3, **dadurch gekennzeichnet, daß** es die Formel (II) aufweist 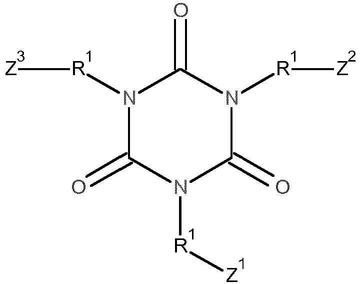 worin
R¹ jeweils für 1,6-Hexylen, 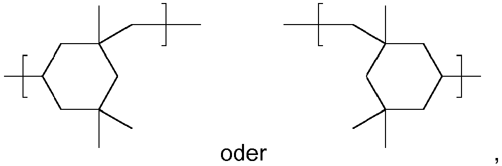 bevorzugt für 1,6-Hexylen steht und
Z¹, Z² und Z³ jeweils unabhängig voneinander ausgewählt ist aus der Gruppe bestehend aus
- einer freien Isocyanatgruppe (-NCO),
- einer blockierten Isocyanatgruppe und
- einer Gruppe der Formel (III) 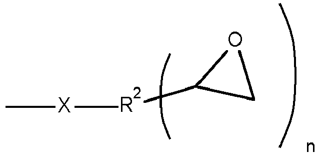 worin
X für Sauerstoff (O) oder Schwefel (S) und
n eine positive ganze Zahl von 1 bis 3, bevorzugt 1 oder 2 und besonders bevorzugt 1 und
R² für eine 1 bis 10 Atome und/oder Atomgruppen umfassenden, (n+1)-wertigen Spacer
steht,
wobei mindestens eine der Gruppen Z¹ bis Z³ eine blockierte Isocyanatgruppe und mindestens eine der Gruppen Z¹ bis Z³ eine Gruppe der Formel (III) sind.

5. Polyurethane gemäß Anspruch 3, **dadurch gekennzeichnet, daß** es die Formel (IV) aufweist 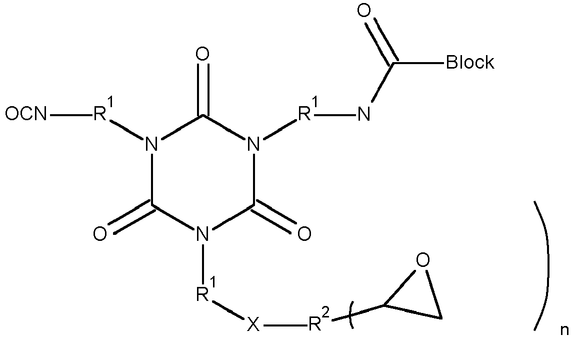 worin
Block für einen Rest eines Blockierungsmittels (C) steht, von dem ein Wasserstoffatom abstrahiert ist,
X für Sauerstoff (O) oder Schwefel (S),
R¹ jeweils für 1,6-Hexylen, 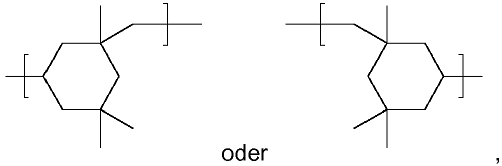 bevorzugt für 1,6-Hexylen,
n für eine positive ganze Zahl von 1 bis 3, bevorzugt 1 oder 2 und besonders bevorzugt 1 steht und
R² für eine 1 bis 10 Atome und/oder Atomgruppen umfassenden, (n+1)-wertigen Spacer steht.

6. Polyurethane gemäß Anspruch 3, **dadurch gekennzeichnet, daß** es die Formel (V) aufweist 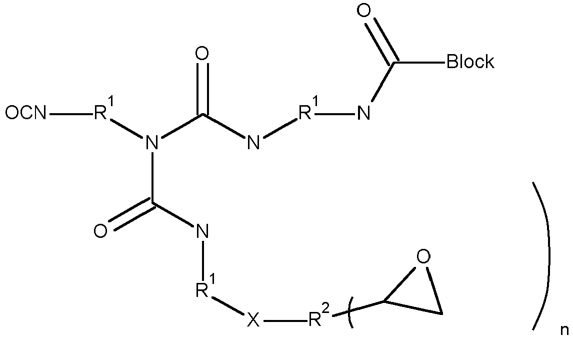 worin
Block für einen Rest eines Blockierungsmittels (C) steht, von dem ein Wasserstoffatom abstrahiert ist,
X für Sauerstoff (O) oder Schwefel (S),
R¹ jeweils für 1,6-Hexylen,
n für eine positive ganze Zahl von 1 bis 3, bevorzugt 1 oder 2 und besonders bevorzugt 1 steht und
R² für eine 1 bis 10 Atome und/oder Atomgruppen umfassenden, (n+1)-wertigen Spacer
steht.

7. Polyurethane gemäß einem der vorstehenden Ansprüche, **dadurch gekennzeichnet, daß** sie einen NCO-Gehalt von weniger als 7 Gew% (berechnet mit einem Molgewicht von 42 g/mol) aufweisen.

8. Beschichtungsmasse, enthaltend
- mindestens ein Polyurethan gemäß einem der vorstehenden Ansprüche,
- optional Lösungsmittel
- optional lacktypische Additive sowie
- optional mindestens einen Katalysator.

9. Beschichtungsmasse gemäß Anspruch 7, **dadurch gekennzeichnet, daß** es sich bei dem Katalysator um Dibutylzinn-dilaurat, Dioctylzinn-dilaurat, Zink-(II)-diacetat, Zink-(II)-di-octoat, Zirkon-Acetylacetonat und Zirkon-2,2,6,6-tetra-methyl-3,5-heptandionat oder Bismut-Verbindungen handelt.

10. Verfahren zur Herstellung von Polyurethanen gemäß Anspruch 1 bis 6, **dadurch gekennzeichnet, daß** man mindestens ein Di- oder Polyisocyanat (A) zunächst teilweise mit mindestens einem Blockierungsmittel (C) umsetzt und anschließend die verbleibenden freien Isocyanatgruppen zumindest teilweise mit mindestens einer Verbindung (B) umsetzt.

11. Verfahren zur Herstellung von Polyurethanbeschichtungen, **dadurch gekennzeichnet, daß** man mindestens ein Polyurethan gemäß einem der Ansprüche 1 bis 7, optional vermischt mit mindestens einem weiteren Polyisocyanat, das ein anderes als das Polyurethan ist, auf ein Substrat aufbringt, und auf eine Temperatur erwärmt, bei der zumindest ein Teil der blockierten Isocyanatgruppen signifikant in freie Isocyanatgruppen und freies Blockierungsmittel (C) gespalten wird.

12. Verwendung von Polyurethanen gemäß einem der Ansprüche 1 bis 7 in einkomponentigen Beschichtungsmassen.

## Claims

1. A polyurethane obtainable by reaction of
(A) at least one aliphatic or cycloaliphatic di- or polyisocyanate,
(B) at least one compound having at least one, preferably precisely one hydroxyl or thiol group and at least one epoxy group, and
(C) at least one blocking agent with a group which is reactive both toward an isocyanate group and toward an epoxy group,
where the compound (C) is selected from the group consisting of
- cyclic secondary amines, di-C₁-C₁₀-alkylamines and di-C₆-C₁₂-cycloalkylamines, preferably diethylamine, diisopropylamine, methylisopropylamine, methylbutylamine, 2,6-dimethylpiperidine, dicyclohexylamines, bis(3,5,5-trimethylcyclohexyl)amine, and 2,2,6,6-tetramethylpiperidine,
- lactams,
- particularly 2-pyrrolidone and caprolactam,
- oximes,
- particularly oximes of methyl n-amyl ketone, methyl isoamyl ketone, methyl 3-ethylheptyl ketone, methyl 2,4-dimethylpentyl ketone, butanone (methyl ethyl ketone), cyclohexanone, methyl isopropyl ketone, methyl isobutyl ketone, diisobutyl ketone, methyl tert-butyl ketone, diisopropyl ketone and 2,2,6,6-tetramethylcyclohexanone, more preferably butanone oxime (methyl ethyl ketone oxime),
- pyrazoles,
- particularly 3,5-dimethylpyrazole,
- triazoles,
- particularly 1,2,4-triazoles,
- 1,3-dicarbonyl compounds,
- particularly acetylacetone, malonic di-C₁-C₁₀ alkyl esters and acetoacetic C₁-C₁₀ alkyl esters, more preferably diethyl malonate and ethyl acetoacetate.

2. The polyurethane according to claim 1, wherein the compound (A) is selected from the group consisting of isophorone diisocyanate, 2,4'-di(isocyanatocyclohexyl)methane, and 4,4'-di(isocyanatocyclohexyl)methane, and also mixtures thereof.

3. The polyurethane according to claim 1, wherein the compound (A) is selected from the group consisting of polyisocyanates containing isocyanurate groups and based on 1,6-hexamethylene diisocyanate and/or isophorone diisocyanate, and polyisocyanates containing biuret groups and based on 1,6-hexamethylene diisocyanate.

4. The polyurethane according to claim 3, which has the formula (II) 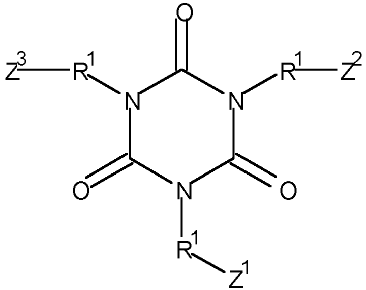 in which
R¹ at each occurrence is 1,6-hexylene, 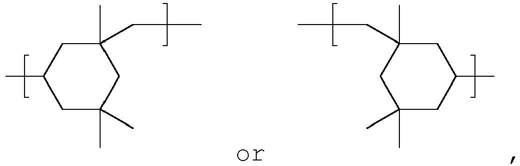 preferably 1,6-hexylene, and
Z¹, Z², and Z³ in each case independently of one another are selected from the group consisting of
- a free isocyanate group (-NCO),
- a blocked isocyanate group, and
- a group of the formula (III) 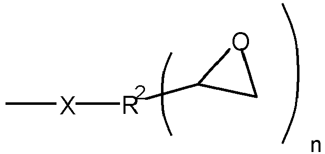 in which
X is oxygen (O) or sulfur (S) and
n is a positive integer from 1 to 3, preferably 1 or 2, and more preferably 1, and
R² is an (n+1)-valent spacer comprising 1 to 10 atoms and/or groups of atoms,
where at least one of the groups Z¹ to Z³ is a blocked isocyanate group, and at least one of the groups Z¹ to Z³ is a group of the formula (III).

5. The polyurethane according to claim 3, which has the formula (IV) 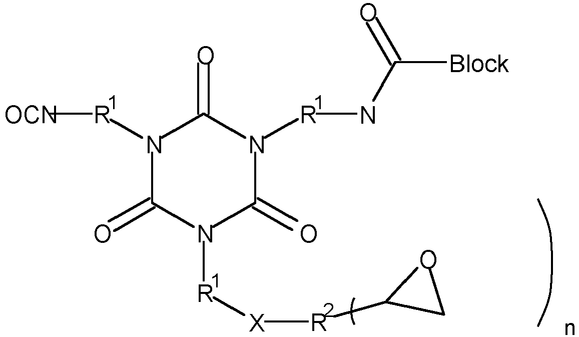 in which
Block is a radical of a blocking agent (C) from which a hydrogen atom has been abstracted,
X is oxygen (O) or sulfur (S),
R¹ at each occurrence is 1,6-hexylene, 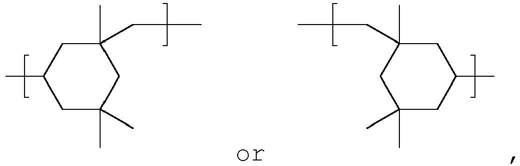 preferably 1,6-hexylene,
n is a positive integer from 1 to 3, preferably 1 or 2, and more preferably 1, and
R² is an (n+1)-valent spacer comprising 1 to 10 atoms and/or groups of atoms.

6. The polyurethane according to claim 3, which has the formula (V) 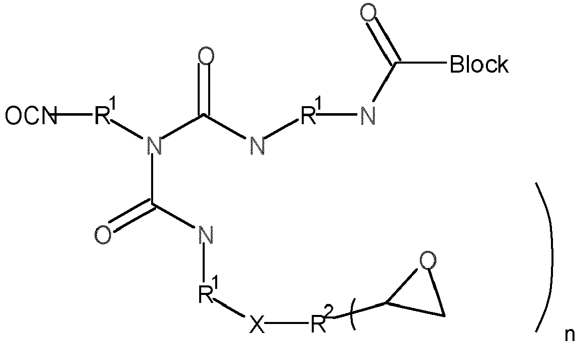 in which
Block is a radical of a blocking agent (C) from which a hydrogen atom has been abstracted,
X is oxygen (O) or sulfur (S),
R¹ at each occurrence is 1,6-hexylene,
n is a positive integer from 1 to 3, preferably 1 or 2, and more preferably 1, and
R² is an (n+1)-valent spacer comprising 1 to 10 atoms and/or groups of atoms.

7. The polyurethane according to any of the preceding claims, which has an NCO content of less than 7 wt% (calculated with a molar weight of 42 g/mol).

8. A coating composition comprising
- at least one polyurethane according to any of the preced- ing claims,
- optionally solvent(s),
- optionally typical coatings additives, and
- optionally at least one catalyst.

9. The coating composition according to claim 7, wherein said catalyst comprises dibutyltin dilaurate, dioctyltin dilaurate, zinc(II) diacetate, zinc(II) dioctoate, zirconium acetylacetonate, and zirconium 2,2,6,6-tetramethyl-3,5-heptanedionate, or bismuth compounds.

10. A process for preparing a polyurethane according to claim 1 to 6, which comprises first subjecting at least one di- or polyisocyanate (A) to partial reaction with at least one blocking agent (C) and subsequently subjecting the remaining free isocyanate groups to at least partial reaction with at least one compound (B).

11. A process for producing a polyurethane coating, which comprises applying at least one polyurethane according to any of claims 1 to 7, optionally mixed with at least one further polyisocyanate different from the polyurethane, to a substrate, and heating to a temperature at which at least some of the blocked isocyanate groups are cleaved significantly into free isocyanate groups and free blocking agent (C) .

12. The use of a polyurethane according to any of claims 1 to 7 in a one-component coating composition.

## Revendications

1. Polyuréthanes, pouvant être obtenus par mise en réaction de
(A) au moins un di- ou polyisocyanate aliphatique ou cycloaliphatique,
(B) au moins un composé contenant au moins un, de préférence exactement un groupe hydroxy ou thiol et au moins un groupe époxy, ainsi que
(C) au moins un agent bloquant contenant un groupe qui est réactif aussi bien vis-à-vis d'un groupe isocyanate que vis-à-vis d'un groupe époxy,
le composé (C) étant choisi dans le groupe constitué par :
- les amines secondaires cycliques, les dialkylamines en C₁-C₁₀ et les di-cycloalkylamines en C₆-C₁₂, de préférence la diéthylamine, la diisopropylamine, la méthylisopropylamine, la méthylbutylamine, la 2,6-diméthylpipéridine, les dicyclohexylamines, la bis(3,5,5-triméthylcyclohexyl)amine et la 2,2,6,6-tétraméthylpipéridine,
- les lactames,
- en particulier la 2-pyrrolidone et le caprolactame,
- les oximes,
- en particulier les oximes de méthyl-n-amylcétone, méthylisoamylcétone, méthyl-3-éthylheptylcétone, méthyl-2,4-diméthylpentylcétone, butanone (méthyléthylcétone), cyclohexanone, méthylisopropylcétone, méthylisobutylcétone, diisobutylcétone, méthyl-t-butylcétone, diisopropylcétone et 2,2,6,6-tétraméthylcyclohexanone, de manière particulièrement préférée le butanone-oxime (méthyléthylcétone-oxime),
- les pyrazoles,
- en particulier le 3,5-diméthylpyrazole,
- les triazoles,
- en particulier les 1,2,4-triazoles,
- les composés de 1,3-dicarbonyle,
- en particulier l'acétylacétone, l'ester dialkylique en C₁-C₁₀ de l'acide malonique et l'ester alkylique en C₁-C₁₀ de l'acide acétoacétique, de manière particulièrement préférée l'ester diéthylique de l'acide malonique et l'ester éthylique de l'acide acétoacétique.

2. Polyuréthanes selon la revendication 1, **caractérisés en ce que** le composé (A) est choisi dans le groupe constitué par le diisocyanate d'isophorone, le 2,4'-di(isocyanatocyclohexyl)méthane et le 4,4'-di(isocyanatocyclohexyl)méthane, ainsi que leurs mélanges.

3. Polyuréthanes selon la revendication 1, **caractérisés en ce que** le composé (A) est choisi dans le groupe constitué par les polyisocyanates contenant des groupes isocyanurate à base de diisocyanate de 1,6-hexaméthylène et/ou de diisocyanate d'isophorone et les polyisocyanates contenant des groupes biuret à base de diisocyanate de 1,6-hexaméthylène.

4. Polyuréthanes selon la revendication 3, caractériséss en ce qu'il présente la formule (II) 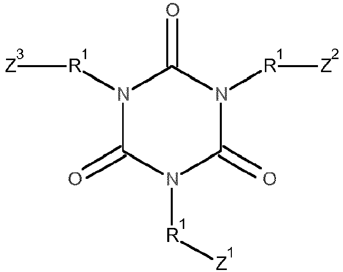 où
R¹ représente à chaque fois 1,6-hexylène, 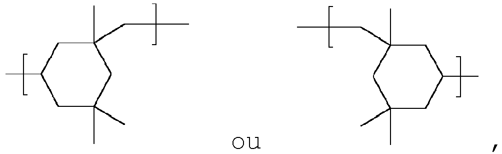 de préférence 1,6-hexylène, et
Z¹, Z² et Z³ sont chacun choisis indépendamment les uns des autres dans le groupe constitué par :
- un groupe isocyanate libre (-NCO),
- un groupe isocyanate bloqué et
- un groupe de la formule (III) 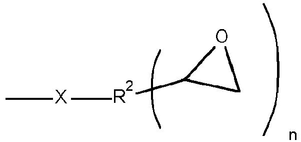
où
X représente oxygène (O) ou soufre (S), et
n représente un nombre entier positif de 1 à 3, de préférence 1 ou 2, et de manière particulièrement préférée 1, et
R² représente un espaceur (n+1)-valent, comprenant 1 à 10 atomes et/ou groupes d'atomes,
au moins un des groupes Z¹ à Z³ étant un groupe isocyanate bloqué et au moins un des groupes Z¹ à Z³ étant un groupe de la formule (III).

5. Polyuréthanes selon la revendication 3, **caractérisés en ce qu'**il présente la formule (IV) 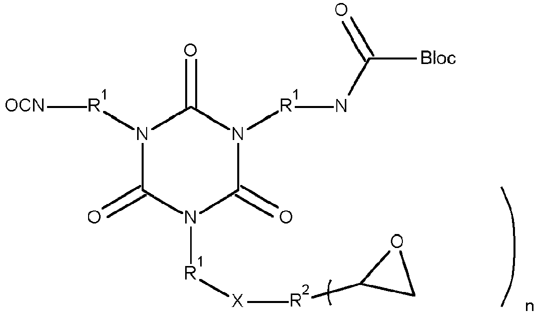 où
Bloc représente un radical d'un agent bloquant (C), duquel un atome d'hydrogène est soustrait,
X représente oxygène (O) ou soufre (S),
R¹ représente à chaque fois 1,6-hexylène, 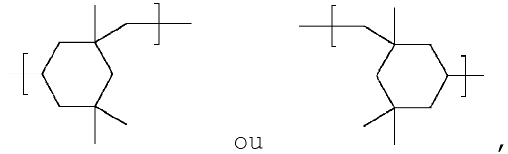 de préférence 1,6-hexylène,
n représente un nombre entier positif de 1 à 3, de préférence 1 ou 2, et de manière particulièrement préférée 1, et
R² représente un espaceur (n+1)-valent, comprenant 1 à 10 atomes et/ou groupes d'atomes.

6. Polyuréthanes selon la revendication 3, **caractérisés en ce qu'**il présente la formule (V) 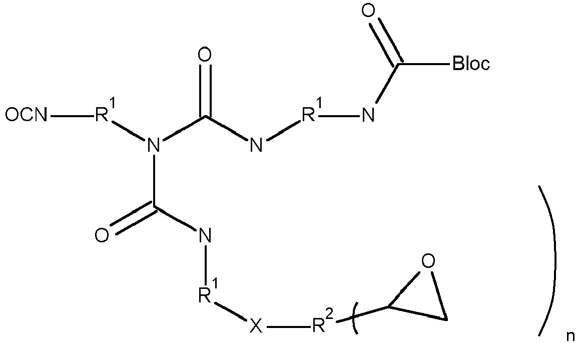 où
Bloc représente un radical d'un agent bloquant (C), duquel un atome d'hydrogène est soustrait,
X représente oxygène (O) ou soufre (S),
R¹ représente à chaque fois 1,6-hexylène,
n représente un nombre entier positif de 1 à 3, de préférence 1 ou 2, et de manière particulièrement préférée 1, et
R² représente un espaceur (n+1)-valent, comprenant 1 à 10 atomes et/ou groupes d'atomes.

7. Polyuréthanes selon l'une quelconque des revendications précédentes, **caractérisés en ce qu'**ils présentent une teneur en NCO de moins de 7 % en poids (calculée avec un poids moléculaire de 42 g/mol).

8. Matériau de revêtement, contenant :
- au moins un polyuréthane selon l'une quelconque des revendications précédentes,
- éventuellement des solvants,
- éventuellement des additifs typiques des vernis, ainsi que
- éventuellement au moins un catalyseur.

9. Matériau de revêtement selon la revendication 7, **caractérisé en ce que** le catalyseur consiste en du dilaurate de dibutylétain, du dilaurate de dioctylétain, du diacétate de zinc (II), du dioctoate de zinc (II), de l'acétylacétonate de zirconium et du 2,2,6,6-tétra-méthyl-3,5-heptanedionate de zirconium ou des composés de bismuth.

10. Procédé de fabrication de polyuréthanes selon les revendications 1 à 6, **caractérisé en ce qu'**au moins un di- ou polyisocyanate (A) est tout d'abord mis en réaction partiellement avec au moins un agent bloquant (C), puis les groupes isocyanate libres restants sont mis en réaction au moins partiellement avec au moins un composé (B).

11. Procédé de fabrication de revêtements de polyuréthane, **caractérisé en ce qu'**au moins un polyuréthane selon l'une quelconque des revendications 1 à 7, éventuellement mélangé avec au moins un polyisocyanate supplémentaire, qui est un autre que le polyuréthane, est appliqué sur un substrat, et porté à une température à laquelle au moins une partie des groupes isocyanate bloqués est significativement clivée en groupes isocyanate libres et agent bloquant libre (C) .

12. Utilisation de polyuréthanes selon l'une quelconque des revendications 1 à 7 dans des matériaux de revêtement monocomposants.
